# EUROPEAN PATENT SPECIFICATION

(11) **EP 3 613 286 B1**
(45) Date of publication and mention of the grant of the patent: **11.12.2024**
(21) Application number: 19201695.4
(22) Date of filing: 01.12.2014
(51) Int. Cl.: A01M 23/16, A01M 23/30, A01M 23/38

(54) **A TRAP**
FALLE
PIÈGE

(30) Priority: 02.12.2013 DK PA201370737
(43) Date of publication of application: 26.02.2020
(62) Divisional of application: 14821494.3
(73) Proprietor: Anticimex Innovation Center A/S, 3200 Helsinge (DK)
(72) Inventor: FRITZBØGER, Preben, 3250 Gilleleje (DK)
(74) Representative: Zacco Denmark A/S

(56) References cited:
- EP-A2- 1 149 530
- FR-A1- 2 738 458
- GB-A- 2 393 628
- GB-A- 541 844
- US-A- 1 992 353
- US-A- 5 857 286
- US-A1- 2009 313 880

## Description

### Background

The invention relates to a trap for animals, in particular rats or mice, and for being arranged on a substantially horizontal face, where this meets a substantially vertical face, said trap comprising: a first flange and a second flange that are connected substantially at right angles to the effect that the trap can be arranged in two positions, where the substantially horizontal face meets the substantially vertical face.

Rats and mice that move in built-up areas will often move along building walls and the like where they feel secure. For the same reason, today the known poisoned traps are deployed along building walls. Thus, this means that the rats or the mice encounter them during their normal movements, following which smell lures them to eat the poison. That behaviour is particularly pronounced where large open spaces abound on built-up areas. However, it is also often seen inside buildings, or, for that matter, in closets or the like where the animals will also prefer to run along the walls. That behaviour is enhanced if the animals can, during their movements, seek shelter underneath a face that adjoins the wall. In the known traps, this is used to advantage in that they are equipped with a passageway that the animals may run into.

The drawback associated with the known poisoned traps is that the animals do not die in the same location as that of the trap as the poison does not take effect until after a period of time. This means that the dead animals may be part of the natural food chain, the poison being absorbable by other animals such as domestic animals or birds that eat either the enfeebled and dying animals or their carcasses. Moreover, the killing as such by means of poisoning is associated with suffering to the animals.

That problem can be solved by use of non-poisoned traps such as eg spring-loaded traps that comprise a spring-released strike mechanism that kills the animal.

A trap is disclosed in US 2009/0313880 and uses electrocuting plates to kill a rodent after its entry into the interior of the trap.

However, the drawback of such known spring-loaded strike traps is that they are to be serviced frequently since they are capable of killing only one animal. Moreover, the known spring-loaded strike traps are most often configured such that the animals may access the trigger mechanism from several sides. The latter causes the trap to sometimes fail, the animals not being hit by the "striker" or being hit thereby in such a manner that they are not destroyed. Consequently the known spring-loaded strike traps require much servicing work.

### Object and brief description of the invention

It is an object of the invention to remedy those drawbacks.

This is accomplished with a trap for animals as defined in claim 1, and more specifically in that in both their positions, the flanges of the trap and the faces span a volume which is delimited such as to define a passage in which a rat or a mouse may move; said trap housing further comprising an inner passageway that a rat or a mouse may run into, said passageway extending from the one flange and into the trap housing, said passageway and trap housing comprising: a trigger mechanism and a killer mechanism.

By configuring the trap with two flanges it is obtained that the trap can be arranged up against an inner wall, an outer wall or the like, to the effect that the one flange abuts on the wall while the other flange abuts on the support and hence forms a passage that a rat or a mouse can move into. As it is, it has been found that rats or mice that move in the vicinity of buildings, or - for that matter - within them, are driven by an instinct that makes them run along the inner walls or the outer walls. Moreover, experience has shown that often the animals have a tendency to hide in passages. This is used to advantage by the invention in that it forms a passage of the flanges, base and wall of the trap when it is arranged eg on a floor and up against a wall. Moreover, the two substantially perpendicular and identical flanges enable that the one and the other, respectively, of the flanges are used to stabilise the trap against the support.

By configuring the housing with inner passageway extending from the one flange, it is accomplished that the animals come across that passageway when they seek shelter in the passage, and since they feel secure in such place they will often explore the inner passage which is fitted with a killer mechanism and a trigger mechanism that kill the animals that move into the inner passageway.

According to claim 1, the inner passageway comprises a killer mechanism that acts by a striker mechanism. By configuring the killer mechanism as a mechanism which, eg by being spring-loaded, strikes the animal's nape, one accomplishes a mechanism that does not require power (eg from batteries), since it can be "charged" by the user.

Moreover, the configuration of the trap with a housing and an inner passageway means that the animal is oriented in one way when the killer mechanism is triggered. This means that the trap with striker function provides a very high degree of reliability that the animal is killed in a fast and reliable manner.

According to an embodiment the inner passageway comprises at least two trigger mechanisms that are arranged to each their side of the killer mechanism, which trigger mechanisms are both to be activated before the killer mechanism is triggered. By configuring the trap with two trigger mechanisms at a suitable distance from each other and which are both to be activated before the trap's killer mechanism is released, it is accomplished that eg a leaf or a snail/slug cannot trigger the trap, since they cannot/will not activate both trigger mechanisms at the same time. By furthermore arranging those two trigger mechanisms to each their side of a killer mechanism, which may eg be a spring-loaded striker mechanism, a very high degree of reliability is obtained that the animal in the trap has such position that the killer mechanism hits the animal in an intended manner which is preferably such that the back of the animal is broken, and that it hence works optimally.

According to claim 1, the trap comprises a bait box. By configuring the trap with a bait box, it is possible to provide the inner passageway with aromas that lure the animals into it.

According to one embodiment, the trap comprises a trigger mechanism that is released mechanically. By that embodiment it is accomplished that the trigger mechanism as such does not require power. Trigger mechanisms of that kind are well known to the person skilled in the art from prior art spring-loaded strike traps, and hence they will not be described in further detail.

According to one embodiment, the trap comprises a trigger mechanism that is released by an electric connection being established by the animal's body between the two trigger mechanisms. By that embodiment, it is ensured that the animal's body has a specific orientation whereby the killer mechanism can be adapted to it with an ensuing increasingly reliable fatality rate.

According to one embodiment, the trigger mechanism of the trap comprises infrared sensors that are triggered by the radiation of heat from an animal. In other trap systems, infrared sensors have been found to provide a very high degree of reliability, and they will not entail erroneous firings in case of eg leaves or snail/slugs.

According to one embodiment the inner passageway comprises at least three trigger mechanisms, the two of which are arranged to each their side of the killer mechanism, which trigger mechanisms are all to be activated in order for the killer mechanism to be triggered. By configuring the trap with three trigger mechanisms, an even higher degree of security is obtained that the animal is positioned expediently relative to the killer mechanism, and the risk of "misses" is minimized.

According to claim 1, the trap is a bait box located at the interior end of the inner passageway. By providing the trap with a bait box located at the interior end of the inner passageway, it is accomplished that the animal needs to move into the passageway. Hereby a high degree of reliability is accomplished that the animal is oriented with its nose first and up against the bait box when the trigger mechanism is released. This brings about an increased fatality rate with a minimum of suffering to animals that are entering and activating the trap. By configuring the trap in this manner with a smell-box arranged at the interior end of the inner passageway, it is thus also accomplished that it is possible to locate a killer mechanism that comprises a striker mechanism in such a way that it hits transversally to the inner passageway and hence to obtain that it is capable of breaking the back of an animal with an increased probability of a quick kill.

According to claim 1, the trap comprises two light sensors and two light emitters, wherein the light beams of the two light emitters hit the two light sensors, and the killer mechanism of the trap is moreover configured such that it is released when the two light sensors do not register light at the same time. By configuring the trap in this way, a very high degree of security is ensured, since both of the two light beams are to be interrupted in order for the killer mechanism of the trap to be activated. It is further accomplished that an easy way of registering kills is provided, it being possible to print an event log eg via the internet or the mobile network when the trap registers that the two light beams are/become interrupted.

The application sets forth two flanges, wherein the one flange may, of course, be constituted of a sidewall of the trap housing.

The application uses the term "striker mechanism", which is not to be interpreted narrowly as an actual striker; rather it also comprises a mechanism such as a spring-loaded bail which is known from the ordinary traps where a bail is released, preferably over the animal's nape, when it touches an item of bait. A particular embodiment of such "bail trap" is described eg in US patent disclosure N. US 3055140 A.

The application and the claims further use the term "killer mechanism". That is intended to be a mechanism capable of killing an animal in the trap or in the trap housing. In other words, one might say that a killer mechanism comprises mutually cooperating mechanical or electrical parts that, upon a given influence, carry out the killing. A killer mechanism is thus not eg conventional rat poison since that does not in itself comprise cooperating mechanical or electrical parts that kill an animal in such a way that it leads to death within the trap as such; but, of course, one may also use poison in combination with a killer mechanism.

In the following, an embodiment of the invention will be described with reference to the figures, wherein:
Figure 1 is a perspective view of how the trap can be arranged with the flange comprising the trap housing located up against a wall;
Figure 2 shows the trap interior with the killer mechanism in three positions;
Figure 3 shows the trap seen from below and an insert part for the inner passageway;
Figure 4 shows the bait box with lid;
Figure 5 shows the trap interior with a trapped animal;
Figure 6 is a perspective view of the trap, seen from below.

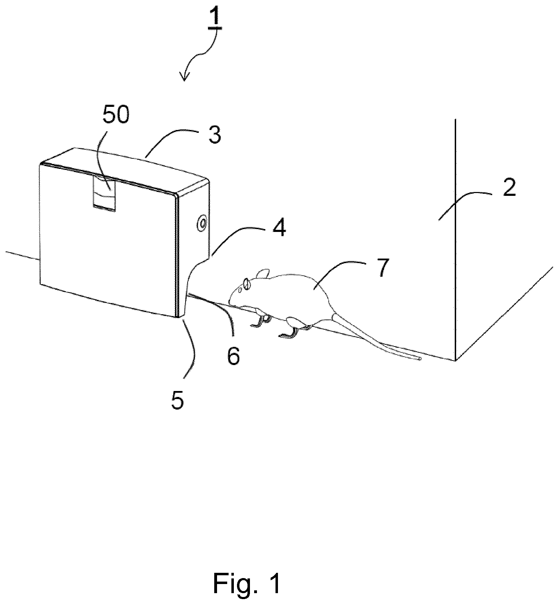

Figure 1 shows an embodiment of the trap (1), wherein it is located up against a wall.

In the shown embodiment, the trap is arranged on an essentially horizontal face, and, as will appear from the figure, the trap is arranged up against an inner wall or an outer wall (2). The trap comprises a trap housing (3) and a first flange (4) and a second flange (5) which are connected substantially at right angles to the effect that the trap can be arranged in two positions where the wall (2) meets the floor. It is thus depicted in the position in which the trap housing abuts on the wall, and the flange (5) abuts on the floor, but it may, of course, also be located such that the trap housing abuts on the floor, and the flange (5) abuts on the wall. When the trap is arranged in one of the two positions it is capable of occupying, with a flange in abutment on the wall, floor, wall, and flanges thus span a passage (6) which an animal (7) is capable of entering.

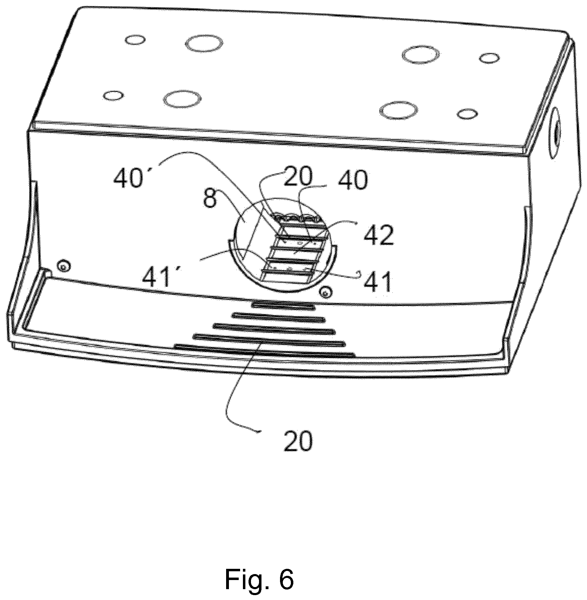

The trap housing comprises an inner passageway (8) which is best shown in figure 6, where the trap with bottom (9) is shown from below. The dimensions of the passageway may be between 45 and 55 mm, but in one embodiment it is about 50 mm. A rat is capable of progressing further into that passageway when it has entered the passage (6).

Thus, the animal, which need not necessarily be a rat, rather it may actually also be another animal such as a mouse, must, in the position of the trap shown in figure 1, move essentially vertically upwards in the inner passageway.

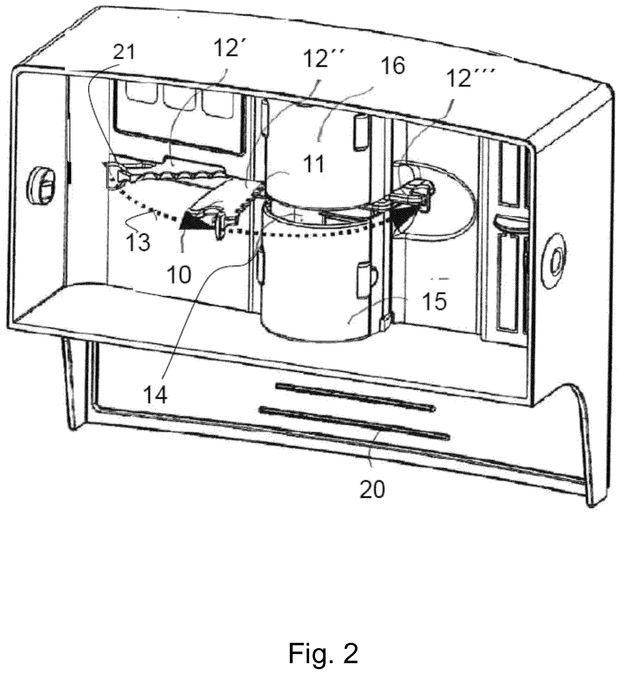

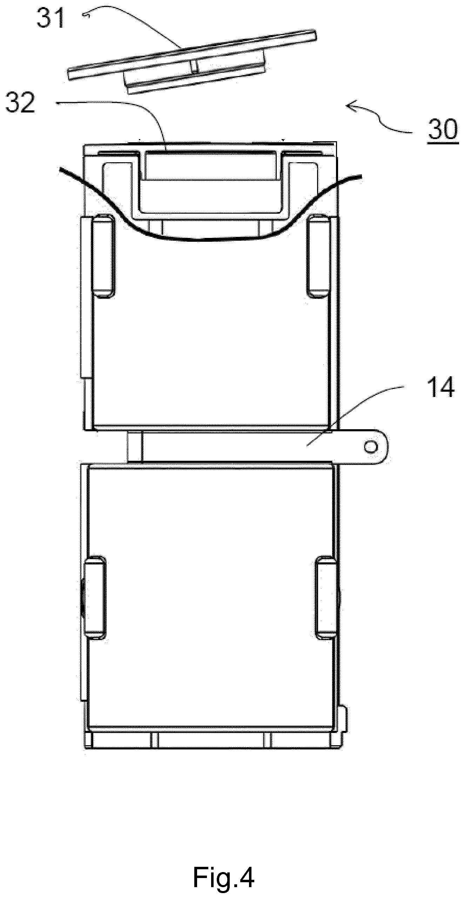

Figure 2 shows an embodiment of the trap, where its bottom plate (9) has been removed. Therein the killer mechanism is shown which, in the shown embodiment, is constituted by a blade (10) which is provided with a (not necessarily sharp) serrated (11) front. The blade (10) is capable of penetrating the inner passageway through a slot (14) which will also appear from figure 4. Also in the shown embodiment, the inner passageway is configured with two lids (15, 16) that may be dismounted. This facilitates maintenance such as cleaning of the trap.

As will also appear from figure 2, the trap is provided with ribs (20) that extend on the inner side of the flange and on into the inner passageway (best seen in figure 6). The object of the ribs is to facilitate the animal's travel into the inner passageway. In the shown embodiment, the trap is configured with two flanges; but, of course, it may also be configured with three or, for that matter, four flanges to the effect that the animals must enter an enclosed passage to reach the inner passageway. However, it has been found to be advantageous to configure the trap with two flanges only to thereby ensure that the animal will not experience that the support (or the wall (2)) changes nature/varies when it moves into the passage (6).

For illustrative purposes, the blade is shown in three positions 12', 12", and 12‴, and the curve (13) it follows when it is about to kill an animal in the passageway is shown with a dotted line. The purpose of the serrations is not to make the blade sharp, but rather to ensure that the force from the blade is transmitted to the animal through a minimised area to thereby render it more efficient; but, of course, the blade 10 can also be configured to be sharp or, for that matter, without serrations.

The impact energy which the blade possesses usually derives from a spring (not shown) which is biased when the blade is moved from position 12‴ to position 12'. That is normally done manually, and to facilitate that operation, the blade may, at its outermost end, be provided with a grip (21).

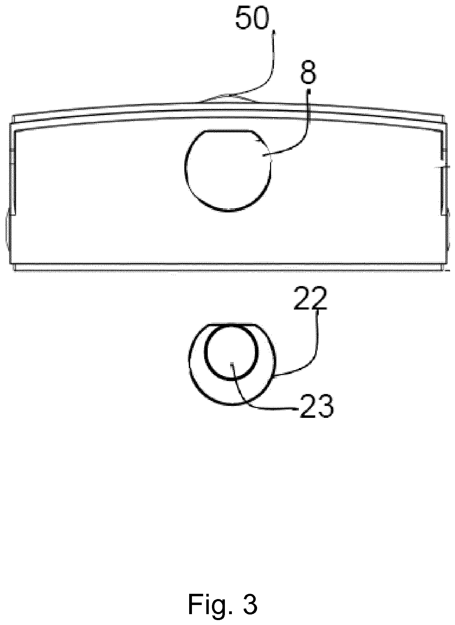

In figure 3, the trap is shown from below with the opening into the inner passageway, and below the trap as such (as shown in the figure) an adapter (22) is shown which may be introduced into the inner passageway (8). The object of that adapter is to reduce the diameter of the inner passageway. In the shown embodiment, the diameter is thus reduced to the size of the opening (23). By providing the trap with one or more associated adapters, it can thus be adapted to animals of different sizes. Usually, it is a switch between rats and mice, and the diameter of the inner passage will, when the adapter is used, normally be about 20 mm, preferably between 16 mm and 24 mm and more preferably between 18 mm and 22 mm.

Figure 4 shows an embodiment of a bait box (30), and it is shown provided with a lid (31) therein. Downwardly, ie in the bottom (32) of the bait box, it may advantageously be provided with small openings (not shown).

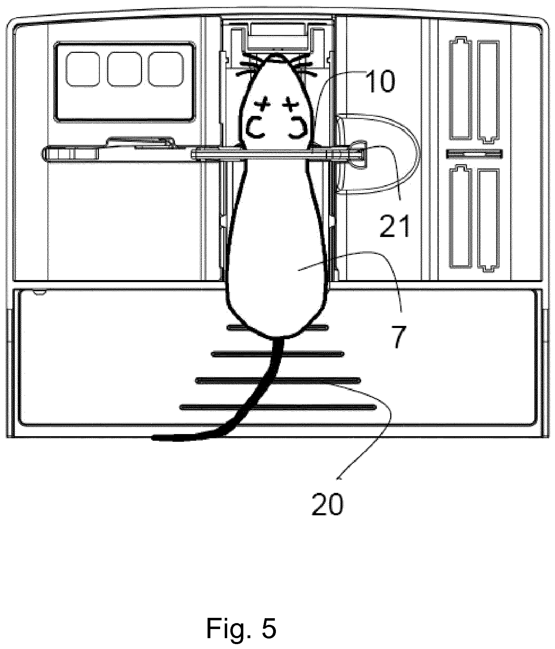

Figure 5 illustrates how the blade of the trap will hit an animal across the nape when it has moved up into the inner passageway.

Figure 6 illustrates how the trigger mechanism can be arranged in the inner passageway. Here, by reference numerals 40 and 41, one may just make out that detectors are arranged therein. Usually such detectors are configured as sensors and, as one may also just make out in the illustration, there are two rows of sensors. One row which is arranged toward the innermost part 40, 41' of the inner passageway, and one row 41, 41' which is located closer to the mouthing of the inner passageway. In the shown embodiment, they function in that the one of those sensors in each row emits light (not necessarily visible). Such light is "shed" onto the opposing side of the inner passageway which is provided with a reflective material. That reflective material will subsequently reflect the light at right angles, whereupon it will yet again hit the reflective material and again be reflected at right angles and hence be shed down towards the second sensor (detector) in the row. By thus configuring the inner passageway with rows of light emitters and a light sensor, the trap's trigger mechanism can be coupled to them in such a manner that it releases the blade when the one or both light sensors are blocked by the body of an animal. By allowing the light to move in a path the "intersects" the inner passageway several times, one may accomplish a trap that can/will be triggered merely if the animal stands in the way of its light/blocks the light on its path from:
- light emitter towards a point on the reflective material;
- light from that point on the reflective material to another point on the reflective material;
- from the second point on the reflective material to the light sensor.

In this context, the term "point" is not to interpreted narrowly, since it is usually an area.

The trap may, of course, also comprise a combination of infrared sensors and the above-referenced system, thereby providing an even higher degree of reliability that the trap is not activated erroneously by eg leaves that trigger the "light blanket"/the light sensor system, eg as described above, since the triggering of the trap can thus be made to depend on both infrared sensor and light blanket or other trigger mechanism being activated at the same time. Such system also entails the option of monitoring the trap as it may emit alarm to the effect that the one system shows an error (be it the infrared or the "light blanket" system that has been blocked/activated) and hence provide information about required service. That may occur eg if the trap is clogged by leaves or snails/slugs (which will entail an alarm from a light blanket, but not from an infrared sensor). Such alarm may, of course, also be made to depend on the "event" taking place throughout a certain period of time.

Usually the trap will be provided with two rows of detectors (as illustrated), and they will usually be arranged to each their side of the area which the blade will hit when it is released (42). And normally the trap will be configured such that it releases the blade only when both trigger mechanisms are activated. Thereby a high degree of security is ensured since an animal activating both trigger mechanisms must necessarily have one body part to each side of the hit range of the blade.

According to one embodiment, the trigger mechanism is configured such that only the one row of light emitters/light sensors is turned on in normal operation. Preferably it is the innermost row. When that row is activated, it will not trigger the blade of the trap, but rather it will turn on the second row of light emitters/sensors, and only in case the latter is also activated will the killer mechanism of the trap also be released. By configuring the trap in this manner, one obtains a high degree of reliability that kill will occur, but it is also obtained that the trap does not spend energy on having two "eternally" active rows. Besides, the two rows that are both to be "triggered" also ensure that the trap's killer mechanism will not be activated by eg a leaf or a snail/slug "triggering" the one row.

In all of its embodiments, the trap may have a built-in programmable computer capable of storing information on status, operation, etc.

Thus, in one embodiment, the trap is also provided with a SIM card or the like enabling it to communicate via eg the mobile network re operational status or when it has been activated. By equipping the trap with a SIM card or other communication functionality it is enabled that a trap system is obtained which is much more easily inspected and maintained. By furthermore configuring a trap system of the above-referenced traps, wherein the individual traps can communicate with each other, a system is obtained in which the individual traps are monitored by each other or by a shared "master".

By configuring such system with or without a master, not only the activation of the trap can be registered; the traps are also capable of monitoring each other's functionality and issue a notice if a trap no longer works correctly or does not work at all.

Thus, such system provides enhanced reliability compared to a system in which the individual trap is provided with a SIM card, such system not providing the option of recording, with the same degree of reliability, when a trap is no longer working. As it is, it is in the nature of things that a broken-down trap is incapable of communicating its errors.

By allowing a number of traps in eg a built-up area to communicate with each other or a master, a monitoring of the traps is herein ensured to provide a higher degree of reliability since a broken-down trap can be registered and reported (via eg the mobile network) by either one of the other traps or by the master unit. Moreover, a system of mutually communicating traps in eg a built-up area means that not all of the traps need to be capable of transmitting to eg a master unit; it will suffice that one trap is capable of transmitting to the "master unit", and that the traps are capable of transmitting to each other. As it is, this means that any information regarding eg a kill will be communicable between the traps and on to the "master unit" from the one trap that communicates with it. Thus, in such system, the master will also be the only one which is provided with eg a SIM card.

By enabling the traps to communicate with each other and with a "master unit", one thus provides a system of traps that will, with a high degree of reliability, be capable of communicating with the "master unit" to the effect that it will, eg via the mobile network, be able to report (eg by SMS text message) eg which trap in the system is not functioning properly or which trap has been ascertained to have animals in its surroundings as explained below. Thus, the master unit may also report which trap has made a kill. The master unit may be constituted of an independent unit which does not necessarily have to be a trap; but, of course, it may also have the configuration of a trap.

Reference being made to figure 1, a further "feature" may be added to the above embodiments, it being possible, as will appear by means of reference numeral (50), on the side of the trap that faces away from the wall (2), to arrange a further detector, such as eg a camera or a movement sensor as it is known eg from burglar alarms, designated collectively "detector" in the following.

As shown in the figure, the view of that detector goes out into the room, and that is associated with the advantage that the trap is also capable of monitoring whether there are animals that, for some reason or other, do not enter the trap. Thus, the internal computer may also be programmed to record a movie every time the detector/camera is activated. Moreover, the detector can be coupled via communication explained above to the effect that a user is also able to connect to the camera if he/she needs eg to check status.

In sections (page 10 and onwards) trap systems with or without a "master" are described. Those systems can also be used to advantage in other traps than the ones subject to the present invention. Thus, they may operate independently of trap type and may hence also be made the object of one or more independent patent applications.

## Claims

1. A trap (1) for animals (7), in particular rats or mice, and for being arranged on a substantially horizontal floor, where this meets a substantially vertical inner or outer wall (2), said trap comprising:
a trap housing (3) comprising an inner passageway (8) which a rat (7) or mouse (7) may run into;
at least a first flange (4) and a second flange (5) that are connected substantially at right angles to the effect that the trap (1) can be arranged in two positions, where the substantially horizontal floor meets the substantially vertical inner or outer wall (2), wherein the flanges (4, 5) of the trap (1) and the substantially horizontal floor and the substantially vertical inner or outer wall (2), in both positions, span a volume which is delimited such as to define a passage (6) in which a rat (7) or a mouse may move when the one flange abuts on the substantially vertical inner or outer wall while the other flange abuts on the substantially horizontal floor forming the passage (6) that a rat or a mouse can move into;
wherein said inner passageway (8) extends from the one flange (4) and the passage (6) and into the trap housing (3), said inner passageway and trap housing comprising:
a trigger mechanism, a killer mechanism and a bait box (30), said killer mechanism acting by a striker mechanism (10, 11), said bait box being located at the interior end of the inner passageway (8), **characterized in that** the killer mechanism is constituted by a blade (10, 11) and that the trigger mechanism of the trap (1) comprises two light sensors and two light emitters, wherein the light beams of the two light emitters are configured to hit the two light sensors, and the blade (10,11) is moreover configured such that it is released when the two light sensors do not register light at the same time.

2. A trap (1) according to claim 1, **characterised in that** the inner passageway (8) comprises at least two trigger mechanisms that are arranged to each their side of the killer mechanism (10, 11), which trigger mechanisms are both to be activated before the killer mechanism is released.

3. A trap according to any one of claims 1-2 individually or in combination, **characterised in that** the bait box (30) is provided with a lid (31) at a first end.

4. A trap (1) according to any one of claims 1-3 individually or in combination, **characterised in that** the trap (1) comprises a trigger mechanism that is released mechanically.

5. A trap (1) according to any one of claims 1-4 individually or in combination, **characterised in that** the inner passageway (8) comprises at least three trigger mechanisms, the two of which are arranged to each their side of the killer mechanism (10, 11), which trigger mechanisms are all to be activated in order for the killer mechanism to be released.

6. A trap (1) according to any one of claims 1-5 individually or in combination, **characterised in that** the trap (1) comprises a control unit controlling activation of the trigger and killer mechanisms and/or being configured for controlling communication.

7. A trap (1) according to any one of claims 1-6 individually or in combination, **characterised in that** the trap (1) comprises two, three or four flanges.

## Patentansprüche

1. Falle (1) für Tiere (7), insbesondere Ratten oder Mäuse, und dafür, auf einem im Wesentlichen horizontalen Boden angeordnet zu werden, wobei dieser auf eine im Wesentlichen vertikale Innen- oder Außenwand (2) trifft, wobei die Falle Folgendes umfasst:
ein Fallengehäuse (3), das einen inneren Gang (8) umfasst, in den eine Ratte (7) oder Maus (7) hineinlaufen kann;
mindestens einen ersten Flansch (4) und einen zweiten Flansch (5), die im Wesentlichen in rechten Winkeln verbunden sind, um zu bewirken, dass die Falle (1) in zwei Positionen angeordnet werden kann, wobei der im Wesentlichen horizontale Boden auf die im Wesentlichen vertikale Innen- oder Außenwand (2) trifft, wobei die Flansche (4, 5) der Falle (1) und der im Wesentlichen horizontale Boden und die im Wesentlichen vertikale Innen- oder Außenwand (2) in beiden Positionen ein Volumen umspannen, das derart begrenzt ist, dass es einen Durchlass (6) definiert, in dem sich eine Ratte (7) oder eine Maus bewegen kann, wenn der eine Flansch an der im Wesentlichen vertikalen Innen- oder Außenwand anliegt, während der andere Flansch an dem im Wesentlichen horizontalen Boden anliegt, der den Durchlass (6) bildet, in den sich eine Ratte oder eine Maus hineinbewegen kann;
wobei sich der innere Gang (8) von dem einen Flansch (4) und dem Durchlass (6) und in das Fallengehäuse (3) erstreckt, wobei der innere Gang und das Fallengehäuse Folgendes umfassen:
einen Auslösemechanismus, einen Tötungsmechanismus und einen Köderkasten (30), wobei der Tötungsmechanismus durch einen Schlagmechanismus (10, 11) wirkt, wobei sich der Köderkasten an dem Innenende des inneren Gangs (8) befindet, **dadurch gekennzeichnet, dass** der Tötungsmechanismus durch eine Klinge (10, 11) gebildet ist und dass der Auslösemechanismus der Falle (1) zwei Lichtsensoren und zwei Lichtsender umfasst, wobei die Lichtstrahlen der zwei Lichtsender dazu ausgelegt sind, auf die zwei Lichtsensoren zu treffen, und die Klinge (10, 11) überdies derart ausgelegt ist, dass sie ausgelöst wird, wenn die beiden Lichtsensoren nicht gleichzeitig Licht erfassen.

2. Falle (1) nach Anspruch 1, **dadurch gekennzeichnet, dass** der innere Gang (8) mindestens zwei Auslösemechanismen umfasst, die jeweils auf ihrer Seite des Tötungsmechanismus (10, 11) angeordnet sind, wobei die Auslösemechanismen beide zu aktivieren sind, bevor der Tötungsmechanismus ausgelöst wird.

3. Falle nach einem der Ansprüche 1-2 einzeln oder in Kombination, **dadurch gekennzeichnet, dass** der Köderkasten (30) mit einem Deckel (31) an einem ersten Ende versehen ist.

4. Falle (1) nach einem der Ansprüche 1-3 einzeln oder in Kombination, **dadurch gekennzeichnet, dass** die Falle (1) einen Auslösemechanismus umfasst, der mechanisch ausgelöst wird.

5. Falle (1) nach einem der Ansprüche 1-4 einzeln oder in Kombination, **dadurch gekennzeichnet, dass** der innere Gang (8) mindestens drei Auslösemechanismen umfasst, von denen zwei jeweils auf ihrer Seite des Tötungsmechanismus (10, 11) angeordnet sind, wobei die Auslösemechanismen alle zu aktivieren sind, damit der Tötungsmechanismus ausgelöst wird.

6. Falle (1) nach einem der Ansprüche 1-5 einzeln oder in Kombination, **dadurch gekennzeichnet, dass** die Falle (1) eine Steuereinheit umfasst, die eine Aktivierung der Auslöse- und Tötungsmechanismen steuert und/oder zum Steuern von Kommunikation ausgelegt ist.

7. Falle (1) nach einem der Ansprüche 1-6 einzeln oder in Kombination, **dadurch gekennzeichnet, dass** die Falle (1) zwei, drei oder vier Flansche umfasst.

## Revendications

1. Piège (1) pour animaux (7), notamment pour rats ou souris, et pour être agencé sur un sol sensiblement horizontal, où celui-ci rencontre une paroi interne ou externe sensiblement verticale (2), ledit piège comprenant :
un boîtier de piège (3) comprenant un passage interne (8) dans lequel un rat (7) ou une souris (7) peut courir ;
au moins une première bride (4) et une seconde bride (5) qui sont reliées sensiblement à angle droit de telle sorte que le piège (1) peut être agencé dans deux positions, où le sol sensiblement horizontal rencontre la paroi interne ou externe sensiblement verticale (2), dans lequel les brides (4, 5) du piège (1) et le sol sensiblement horizontal et la paroi interne ou externe sensiblement verticale (2), dans les deux positions, couvrent un volume qui est délimité de manière à définir un passage (6) dans lequel un rat (7) ou une souris peut se déplacer lorsque l'une des brides bute sur la paroi interne ou externe sensiblement verticale tandis que l'autre bride bute sur le sol sensiblement horizontal formant le passage (6) dans lequel un rat ou une souris peut se déplacer ;
dans lequel ledit passage interne (8) s'étend depuis l'une des brides (4) et le passage (6) et dans le boîtier de piège (3), ledit passage interne et le boîtier de piège comprenant :
un mécanisme de déclenchement, un mécanisme tueur et une boîte à appât (30), ledit mécanisme tueur agissant par un mécanisme percuteur (10, 11), ladite boîte à appât étant située à l'extrémité intérieure du passage interne (8), **caractérisé en ce que** le mécanisme tueur est constitué par une lame (10, 11) et **en ce que** le mécanisme de déclenchement du piège (1) comprend deux capteurs de lumière et deux émetteurs de lumière, dans lequel les faisceaux lumineux des deux émetteurs de lumière sont configurés pour frapper les deux capteurs de lumière, et la lame (10, 11) est en outre configurée de telle sorte qu'elle soit libérée lorsque les deux capteurs de lumière n'enregistrent pas de lumière en même temps.

2. Piège (1) selon la revendication 1, **caractérisé en ce que** le passage interne (8) comprend au moins deux mécanismes de déclenchement qui sont agencés de chaque côté du mécanisme tueur (10, 11), lesquels mécanismes de déclenchement doivent tous deux être activés avant que le mécanisme tueur ne soit libéré.

3. Piège selon l'une quelconque des revendications 1 et 2, individuellement ou en combinaison, **caractérisé en ce que** la boîte à appât (30) est pourvue d'un couvercle (31) à une première extrémité.

4. Piège (1) selon l'une quelconque des revendications 1 à 3, individuellement ou en combinaison, **caractérisé en ce que** le piège (1) comprend un mécanisme de déclenchement qui est libéré mécaniquement.

5. Piège (1) selon l'une quelconque des revendications 1 à 4, individuellement ou en combinaison, **caractérisé en ce que** le passage interne (8) comprend au moins trois mécanismes de déclenchement, dont deux sont agencés de chaque côté du mécanisme tueur (10, 11), lesquels mécanismes de déclenchement doivent tous être activés pour que le mécanisme tueur soit libéré.

6. Piège (1) selon l'une quelconque des revendications 1 à 5, individuellement ou en combinaison, **caractérisé en ce que** le piège (1) comprend une unité de commande commandant l'activation des mécanismes tueur et de déclenchement et/ou étant configurée pour commander la communication.

7. Piège (1) selon l'une quelconque des revendications 1 à 6, individuellement ou en combinaison, **caractérisé en ce que** le piège (1) comprend deux, trois ou quatre brides.
